(19) Europäisches Patentamt
European Patent Office
Office européen des brevets

(11) Publication number: **0 103 034 A1**

# (12) EUROPEAN PATENT APPLICATION

(21) Application number: **82108326.8**

(22) Date of filing: **09.09.82**

(51) Int. Cl.³: **C 01 D 15/00**, C 01 F 7/00, B 01 J 41/08

(43) Date of publication of application: **21.03.84 Bulletin 84/12**

(84) Designated Contracting States: **BE DE FR GB IT NL**

(71) Applicant: **THE DOW CHEMICAL COMPANY, Dow Center 2030 Abbott Road Post Office Box 1967, Midland Michigan 48640 (US)**

(72) Inventor: **Burba, John Leslie III, 168 Dallas, City of Angleton, County of Brazoria Texas 77515 (US)**
Inventor: **Bauman, William Carrel, 440 Hwy, 332, No. 12, Lake Jackson Texas (US)**
Inventor: **Lee, John Malcolm, 123 Aster Lane, Lake Jackson Texas (US)**

(74) Representative: **Casalonga, Axel et al, BUREAU D.A. CASALONGA OFFICE JOSSE & PETIT Baaderstrasse 12-14, D-8000 München 5 (DE)**

(54) **Crystalline lithium aluminates and a process for the preparation thereof.**

(57) Crystalline hydrous aluminas, $Al(OH)_3$, are reacted with LiX, where X is anion, under appropriate conditions to prepare crystalline compounds conforming substantially to the empirical formula

$$LiX \cdot 2Al(OH)_3 \cdot nH_2O$$

where X is anion and $nH_2O$ represents waters of hydration. Depending on the beginning hydrous alumina, some of the crystalline compounds are of a novel 2-layer unit cell structure and some of a 3-layer unit cell structure. These compounds can then be reacted in aqueous solution with anions (A) having a valence of 1, 2 or 3 to form novel lithium aluminates having the empirical formula

$$(LiA_x)_y \cdot 2Al(OH)_3 \cdot nH_2O$$

where n is the number of waters of hydration, y is the number of lithium atoms present for each 2Al atom, A has a negative valence of 1, 2 or 3, and x is the reciprocal of the valence of A.

EP 0 103 034 A1

CRYSTALLINE LITHIUM ALUMINATES
AND A PROCESS FOR THE PREPARATION THEREOF.

It is known, e.g., from U.S. Patents 4,116,858, September 19, 1978 and 4,159,311, June 8, 1979 (both by Lee and Bauman), that an ion-exchange resin may be saturated with aqueous $AlCl_3$ solution and that reaction with $NH_4OH$ converts the $AlCl_3$ in situ to $Al(OH)_3$. This so-formed amorphous $Al(OH)_3$ is then reacted with LiX, where X is halide, at elevated temperature to form crystalline $LiX \cdot 2Al(OH)_3$ which is useful in selectively recovering $Li^+$ values from aqueous solutions, e.g., Li-containing brines.

It is also known, e.g., from U.S. Patents 4,116,856, September 19, 1978 and 4,221,767, August 18, 1980 (both by Lee and Bauman), that improvements in the above-discussed formation of crystalline $LiX \cdot 2Al(OH)_3$ are found by reacting amorphous $Al(OH)_3$ or crystalline hydrous alumina (e.g., nordstrandite, bayerite, gibbsite or mixtures of these) with LiOH to form $LiOH \cdot 2Al(OH)_3 \cdot nH_2O$ which is then reacted with LiX to form the crystalline $LiX \cdot 2Al(OH)_3$, where X is halide.

The present invention, in its first aspect, is believed to be most closely related to the above-identified patents. U.S. Patent 4,116,856 is particularly relevant where it discloses that crystalline hydrous alumina (e.g., nordstrandite and/or bayerite) dispersed in ion-exchange resin is not converted back to its original $LiX \cdot 2Al(OH)_3 \cdot nH_2O$ form by treatment with LiX unless the hydrous alumina is first, or simultaneously, reacted with LiOH. It has been unexpectedly found that crystalline hydrous aluminas can be reacted directly with lithium salts to form crystalline lithium salt aluminates if the correct ranges of temperature and concentration are employed.

The present invention, in its first aspect, is a process whereby crystalline hydrous alumina is converted to crystalline $LiX \cdot 2Al(OH)_3 \cdot nH_2O$, where $nH_2O$ indicates waters of hydration and where X indicates anions which will form acids when in molecular combination with hydrogen or will form salts when in molecular combination with metal ions, said process comprising reacting the said alumina with a concentrated solution of LiX at an elevated temperature of at least 85°C.

The lithium aluminates may be prepared neat (unsupported) or supported on a substrate.

In the first aspect of the present invention, crystalline hydrous aluminas are reacted with lithium salts under the influence of elevated temperature and sufficient concentration to form lithium aluminates, designated here as $LiX \cdot 2Al(OH)_3 \cdot nH_2O$ where X is an anion characterized as an anion which will form acids when in

molecular combination with hydrogen or will form salts when in molecular combination with metal ions. It will be understood, of course, that the lithium aluminates will normally contain some waters of hydration, designated as $nH_2O$ in the above formula. The anion may have a valence of 1, 2 or 3.

When the beginning hydrous alumina is amorphous, such as when freshly prepared by ammonia precipitation of $Al(OH)_3$ from an $AlCl_3$ solution, the reaction to form lithium aluminates may be done using relatively weak solutions of the lithium salt (up to about 10 percent) and at relatively low temperatures (e.g., 20°C--40°C), then when heated at, e.g., about 50°C or higher, the lithium aluminate becomes crystallized.

However, when the beginning hydrous alumina is crystalline (such as bayerite, gibbsite, nordstrandite or boehmite), then the relatively low temperature treatment with lithium salt does not appear to form an appreciable amount (if any) of lithium aluminate within a reasonable length of time.

It has now been found, surprisingly, that when heated at elevated temperatures of preferably about 85°C-120°C, the mixture of crystalline hydrous alumina and lithium salt forms lithium aluminate. Along with this higher temperature, it is necessary that the lithium salt solution be of a relatively high concentration, preferably above about 12 percent, most preferably above about 20 percent or may be at the saturation limit of the lithium salt, especially if it is only slightly soluble. The combination of high temperature and high concentration is particularly effective in forcing the lithium

salt into the layers of the hydrous alumina crystals, which in some cases gives a crystallographic unit cell having two layers of lithium salt and two layers of hydrous alumina and in other cases gives a crystallographic unit cell having three layers of lithium salt and three layers of hydrous alumina.

The lithium aluminates discussed here have two crystal structures, viz. those of 2-layer crystallographic unit cells and those of 3-layer crystallographic unit cells. The 3-layer lithium aluminates have a 3-fold screw axis oriented parallel to the c-axis of the lithium aluminate crystal. The 2-layer lithium aluminates have a 2-fold axis of rotation oriented parallel to the c-axis, as determined by the x-ray crystal studies.

For purposes of discussion and description, 2-layer lithium aluminates and 3-layer lithium aluminates are graphically illustrated as follows:

2-layer

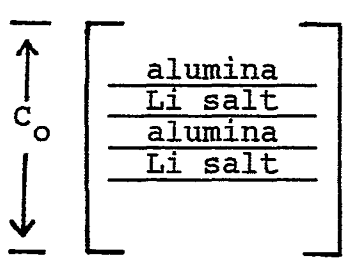


3-layer

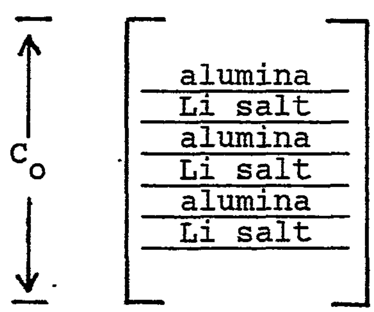


The heating of the mixture of lithium salt and hydrous alumina crystals may be performed in an open vessel, in a closed vessel or at reflux. If performed in an open vessel where water vapor can escape of if

reduced pressure is applied to remove water vapor, the resulting increase in concentration of the lithium salt is beneficial in that the higher concentration tends to help drive the lithium salt into the alumina layers.

In those instances wherein water vapor is allowed to escape, a low concentration (generally less than about 10 percent) lithium salt may be employed at the outset, then the increase in concentration which results from water loss can be sufficient to drive the lithium salt into the hydrous alumina.

The preferred lower ratio of lithium salt to hydrous alumina, $Al(OH)_3$, in the mixture is about 0.5 mole of Li to 1 mole of Al. The upper limit of Li to Al is the saturation point of the lithium salt solution.

The lithium salts for reaction with the hydrous alumina can be at least one of the group exemplified by LiCl, LiBr, LiI, $LiNO_3$, $LiClO_3$, LiClO, LiSCN, LiOOCH and $LiC_2H_3O_2$. Stated another way the X in LiX may be any anion of a halo acid (excluding F), a mineral acid or inorganic acid, or an organic acid which is stable under reaction conditions. Virtually any water-soluble lithium salt would be expected to be within the scope of this aspect of the invention, providing the anion is not so large as to preclude entering the interstices of the alumina crystal.

The 2-layer variety of lithium aluminate is a novel composition and is prepared by reaction of lithium salt with gibbsite. Reaction of lithium salt with other forms of hydrous alumina, such as bayerite or nordstrandite, produces 3-layer lithium aluminates. It is

not possible to convert 2-layer lithium aluminate to 3-layer lithium aluminate without completely solubilizing the lithium aluminate to reprecipitate it as 3-layer.

The 2-layer $LiCl \cdot 2Al(OH)_3 \cdot nH_2O$, whether in neat form or supported on or within a substrate, exhibits different behavior in $H_2O$ than does the 3-layer variety. When reacted with $H_2O$ the 2-layer $LiCl \cdot 2Al(OH)_3 \cdot nH_2O$ decomposes to LiCl and gibbsite with the equilibrium LiCl concentration of about 0.14 mole of $Li^+$ per liter of solution, whereas 3-layer $LiCl \cdot 2Al(OH)_3 \cdot nH_2O$ is stable in $H_2O$ if there is as much as about 50 ppm $Li^+$ in the solution.

The 2-layer $LiX \cdot 2Al(OH)_3 \cdot nH_2O$ can be reacted with LiOH to form 2-layer $LiOH \cdot 2Al(OH)_3 \cdot nH_2O$; this can then be neutralized with an acid to form 2-layer lithium aluminate containing anions of the acid. Likewise 3-layer $LiOH \cdot 2Al(OH)_3 \cdot nH_2O$ can be neutralized with an acid to form 3-layer lithium aluminate containing anions of the acid.

The description which follows is directed to the second aspect of the present invention.

U.S. Patent 4,221,767, August 18, 1980 (Lee and Bauman), teaches and claims composites of ion-exchange resins having suspended therein a crystalline hydrous alumina, an amorphous hydrous alumina, or a crystalline $LiOH \cdot 2Al(OH)_3$ structure. From these aluminas and aluminates, crystalline lithium haloaluminates are beneficially prepared.

The second aspect of the present invention relates to preparations of numerous lithium aluminates

from crystalline $LiOH \cdot 2Al(OH)_3$, whether or not the aluminate is suspended in (or on) a substrate.

As mentioned previously, the present invention, in its second aspect, is crystalline lithium aluminates conforming to the empirical formula

$$(LiA_x)_y \cdot 2Al(OH)_3 \cdot nH_2O$$

where A represents anions or negative valence radicals, other than hydroxyl, having a valence of 1, 2 or 3;

x is the reciprocal of the valence of A;

y is a numerical value in the range of 0.5 to 1.2; and

n is a value of at least 1 for waters of hydration.

As shown in U.S. Patent 4,221,767 (previously identified), hydrous alumina, represented by the formula $Al(OH)_3$, is suspended in an ion-exchange resin and is reacted with aqueous LiOH at elevated temperatures to form crystalline $LiOH \cdot 2Al(OH)_3$. It is understood, of course, that the so-formed crystalline aluminates, being in contact with water, have waters of hydration attached.

U.S. Patent 4,221,767 also discloses that the crystalline $LiOH \cdot 2Al(OH)_3$ is beneficially converted to $LiX \cdot 2Al(OH)_3$, where X is a halogen, i.e., Cl, Br or I.

It has also been found that the crystalline $LiOH \cdot 2Al(OH)_3$, whether supported within or on a substrate or prepared in the absence of a substrate, is beneficially

converted to other lithium aluminates by reactions which replace the OH radicals with other anions or radicals having a valence of 1, 2 or 3.

Substrates in addition to ion-exchange resins contemplated in accordance with the present invention include, e.g., inorganic substrates (which are substantially inert to the reactions involved in preparing the $(LiA_x)_y \cdot 2Al(OH)_3$, inert organic or inert polymeric substrates and inert metallic substrates.

The anions (A) (other than halide and hydroxyl) which are contemplated within the scope of the present invention are the anions of soluble inorganic acids, mineral acids, organic acids having, preferably, up to about 8 carbon atoms, or anions of the water-soluble salts of such acids. The anions may have valences of 1, 2 or 3. Generally speaking, anions which are larger than those containing about 8 carbon atoms are relatively bulky and may require extra effort to create intercalation compounds in the aluminate crystal structure.

The anions of inorganic acids and mineral acids are, for example, $SO_4^{--}$, $HCO_3^-$, $BO_2^-$, $H_2PO_4^-$, $HPO_4^{--}$, $ClO_4^-$, $HCrO_4^-$, $NO_3^-$, $SO_3^{--}$, $HSO_3^-$, $NO_2^-$, $H_2AsO_4^-$, $HAsO_4^{--}$, $F^-$, $HS^-$, $ClO_3^-$, $H_2PO_3^-$, $HPO_3^{--}$, $H_3P_2O_7^-$, $H_2P_2O_7^{--}$, $HP_2O_7^{---}$ and $NH_2SO_3^-$.

The anions of organic acids may be derived, for example, from monobasic acids (RCOOH), dibasic acids (HOOC-COOH or HOOC-R-COOH), and tribasic acids (HOOC-R(COOH)-COOH) where R is a substituted or unsubstituted hydrocarbon moiety. Examples of monobasic

acids are, for instance, formic acid, acetic acid, chloroacetic acid, dichloroacetic acid, trichloroacetic acid, acrylic acid, methacrylic acid, crotonic acid, butyric acid, propionic acid, tartaric acid and hexanoic acid. Examples of dibasic acids are, for instance, oxalic acid, malonic acid, malic acid, succinic acid and pimelic acid. Citric acid is an example of a tribasic acid, $HOOCCH_2C(OH)(COOH)CH_2COOH$. Hydroxy carboxylic acids, such as glycollic acid, lactic acid, tartaric acid, and malic acid are within the scope of the present invention. Organic radicals with inorganic substituents, such as $CH_3SO_3^-$ and $C_6H_{11}SO_3^-$ are within the scope of this invention.

Crystalline or amorphous hydrous alumina, denoted as $Al(OH)_3$, is reacted at elevated temperature to form crystalline $LiOH \cdot 2Al(OH)_3 \cdot nH_2O$ in an aqueous medium. The beginning hydrous alumina may be unsupported by a substrate, or may be supported on a substrate, or may be dispersed or suspended within a porous substrate. The reaction between the hydrous alumia and the LiOH may take place at room temperature but to assure that the reaction is substantially completed within a reasonable length of time, an elevated temperature of at least 50°C, preferably at least about 75°C should be used. The amount of LiOH should not be in such excess that the aluminate is caused to precipitate outside the pores. The aqueous media may contain other ingredients and, if they are substantially inert or do not interfere with the desired reaction, are permissible. Insoluble, substantially inert particles may be present in the aqueous medium and may serve as a substrate for

the $LiOH \cdot 2Al(OH)_3$ as it is formed. Choice of a substrate (if used) is dependent, of course, on the intended use of, or application of, the crystalline $LiOH \cdot 2Al(OH)_3 \cdot nH_2O$.

The present invention is not limited to a particular means for providing the beginning hydrous alumina for reaction with the LiOH. For example, the pores of a substrate may be substantially filled with $Al(OH)_3$ by growing seeds of $Al(OH)_3$ in the pores from an aqueous solution of sodium aluminate.

The crystalline $LiOH \cdot 2Al(OH)_3 \cdot nH_2O$ is then reacted in aqueous medium with anions or negative valence radicals (A) having a valence of 1, 2 or 3 to form the $(LiA_x)_y \cdot 2Al(OH)_3 \cdot nH_2O$ compounds of the present invention. A monovalent anion or radical yields $(LiA)_y \cdot 2Al(OH)_3 \cdot nH_2O$. A divalent anion or radical yields $(LiA_{1/2})_y \cdot 2Al(OH)_3 \cdot nH_2O$. A trivalent anion or radical yields $(LiA_{1/3})_y \cdot 2Al(OH)_3 \cdot nH_2O$. The value of y is normally 1, but the actual value of y may vary over the range of about 0.5 to 1.2. The value of n is in the range of 1 to 6.

The so-prepared lithium aluminates are useful in selectively recovering $Li^+$ ions from solution if the amount of $LiA_x$ in the aluminate structure is first reduced to a lower concentration (but not completely reduced), leaving space in the crystal for taking up $LiA_x$ salt until the crystal is once again "loaded" with $LiA_x$ salt.

The so-prepared lithium aluminates are also useful in exchanging of anions in aqueous solution, where an anion in solution replaces the anion in the crystal. For instance, where the A anion is the ascorbate radical

0103034

of ascorbic acid (Vitamin C), the ascorbate anion is replaced by Cl in aqueous HCl, thereby providing ascorbic acid in the aqueous medium. The anion of ascorbic acid (a lactone) is formed by a keto-to-enol shift.

It is well-known that catalytic systems based on zeolite crystals are quite sensitive to inter crystalline spacing. The novel lithium aluminates of the present invention provide an array of acid catalysts wherein the interplane or spacing of the crystalline aluminate structure is varied according to the size of the salt anion in the lithium aluminate.

The following examples illustrate both the first and second aspects of the present invention.

Example 1

A 50-g portion of gibbsite is reacted with 200 ml of 20 percent LiCl solution at 115°C for 2 hours. The product obtained is 2-layer $LiCl \cdot 2Al(OH)_3 \cdot nH_2O$ as determined by x-ray diffraction data.

Example 2

A 200-ml portion of a macroporous, weak base, styrene-divinylbenzene ion-exchange resin in bead form, containing gibbsite within its pores is reacted with 500 ml of 20 percent aqueous LiCl solution at 105°C under reflux for 2-3 hours. The reaction product obtained is 2-layer $LiCl \cdot 2Al(OH)_3 \cdot nH_2O$ as determined by x-ray diffraction data.

Example 3

A 200-ml portion of the same resin as in Example 2 above but containing bayerite within its pores, is reacted with 500 ml of 20 percent aqueous LiCl solution at 105°C under reflux for 2-3 hours. The reaction product obtained is 3-layer $LiCl\cdot 2Al(OH)_3\cdot nH_2O$ as determined by x-ray diffraction data.

Example 4

The same resin as above (200 ml), but containing nordstrandite within its pores, is refluxed with 500 ml of 20 percent aqueous LiCl solution for 2-3 hours. The reaction product obtained is 3-layer $LiCl\cdot 2Al(OH)_3\cdot nH_2O$ as determined by x-ray diffraction data.

Example 5

2-Layer $LiCl\cdot 2Al(OH)_3\cdot nH_2O$ (10 g) is repeatedly washed with 1 percent aqueous LiOH solution at room temperature until no $Cl^-$ is detected in the filtrate by $AgNO_3$ test. Analysis data from x-ray diffraction shows the material is 2-layer $LiOH\cdot 2Al(OH)_3\cdot nH_2O$.

The 2-layer $LiOH\cdot 2Al(OH)_3\cdot nH_2O$ is titrated with acrylic acid to a pH of 5. X-ray diffraction data shows 2-layer $Li(CH_2CHCO_2)\cdot 2Al(OH)_3\cdot nH_2O$.

Compounds made following the general practice illustrated in the above examples are useful in selectively removing $Li^+$ values from aqueous solution and are also useful in exchanging of the anion (X) with other anions in aqueous solution.

0103034

Example 6

An aqueous solution of $AlCl_3$ is reacted with $NH_4OH$ thereby precipitating $Al(OH)_3$. The $Al(OH)_3$ is washed with $H_2O$ to wash out $NH_4Cl$ and a slurry of the $Al(OH)_3$ in water is reacted with LiOH at 95°C to form crystalline $LiOH \cdot 2Al(OH)_3 \cdot nH_2O$.

A portion of the $LiOH \cdot 2Al(OH)_3 \cdot nH_2O$ slurried in water is titrated to pH 6 with $CCl_3COOH$ to form crystalline $Li(CCl_3COO) \cdot 2Al(OH)_3 \cdot nH_2O$.

In a similar manner other lithium aluminates are prepared wherein the anion is $BO_2^-$, $NO_3^-$, $HCO_3^-$, $H_2PO_4^-$, $SO_4^{--}$, $F^-$, $CH_2ClOO^-$ and $CCl_2HCOO^-$.

X-ray diffraction patterns on the above products indicate a crystalline material falling in the trigonal system with hexagonal axial lengths of between 21-42A for $C_o$ with A and B axis of 5.06-5.14A, with the dimensions being dependent on the size of the anion. White powders are generally produced, but tinted or colored products are not precluded from this invention.

The number of waters of hydration in the crystalline aluminates of the present invention is generally within the range of 1 to 6, though the number of waters is substantially reduced to one by heating the aluminates at a temperature in the range of 100°C to 120°C. Heating at temperatures above this range tends to decompose the crystals.

 0103034

1. A process whereby crystalline hydrous alumina is converted to crystalline $LiX \cdot 2Al(OH)_3 \cdot nH_2O$, where $nH_2O$ indicates waters of hydration and where X indicates anions which will form acids when in molecular combination with hydrogen or will form salts when in molecular combination with metal ions, said process comprising reacting the said alumina with a concentrated solution of LiX at an elevated temperature of at least 85°C.

2. The process of Claim 1 wherein the alumina is supported on, or within, a solid substrate.

3. The process of Claim 1 wherein the alumina is within the pores of a porous substrate.

4. The process of Claim 1 wherein the hydrous alumina is within the pores of a macroporous ion-exchange resin.

5. The process of Claim 1 wherein the $LiX \cdot 2Al(OH)_3 \cdot nH_2O$ is converted to $LiOH \cdot 2Al(OH)_3 \cdot nH_2O$ by reaction with LiOH.

6. The process of Claim 1 wherein the alumina is gibbsite and the $LiX \cdot 2Al(OH)_3 \cdot nH_2O$ reaction product is of the 2-layer unit cell variety.

7. The process of Claim 1 wherein the alumina is bayerite or nordstrandite, and the $LiX \cdot 2Al(OH)_3 \cdot nH_2O$ reaction product is of the 3-layer unit cell variety.

8. Crystalline lithium aluminates conforming to the empirical formula

$$(LiA_x)_y \cdot 2Al(OH)_3 \cdot nH_2O$$

where A represents anions or negative valence radicals, other than hydroxyl, having a valence of 1, 2 or 3;

x is the reciprocal of the valence of A;

y is a numerical value in the range of 0.5 to 1.2; and

n is a value of at least 1 for waters of hydration.

9. A method for preparing crystalline lithium aluminates conforming substantially to the empirical formula

$$(LiA_x)_y \cdot 2Al(OH)_3 \cdot nH_2O$$

wherein A represents anions or negative valence radicals having a valence of 1, 2 or 3;

x is the reciprocal of the valence of A;

y is a numerical value in the range of 0.5 to 1.2; and

n is a value of at least 1 for waters of hydration,

said process comprising reacting crystalline $LiOH\cdot 2Al(OH)_3\cdot nH_2O$ with anions or negative valence radicals contained in an aqueous medium, thereby replacing the $OH^-$ ions of the crystal with anions or negative valence from said aqueous medium.

10. The crystalline lithium aluminates of Claim 8 or 9 when prepared on or within a substantially inert support or substrate.

11. The crystalline lithium aluminates of Claim 8 or 9 wherein A represents at least one anion or negative valence radical of an inorganic acid, a mineral acid, an organic acid having from 1 to 8 carbon atoms or of a salt of any of the said acids.

12. The crystalline lithium aluminates of Claim 8 or 9 when supported by a substrate comprising substantially inert, solid bodies of inorganic, organic, polymeric or metallic material.

13. The crystalline lithium aluminates of Claim 8 or 9 wherein the waters of hydration are represented by a value of n in the range of 1 to 6.

European Patent Office

# EUROPEAN SEARCH REPORT

0103034

Application number

EP 82 10 8326

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 348 295 (J.L. BURBA)<br>----- | 1-9 | C 01 D 15/00<br>C 01 F 7/00<br>B 01 J 41/08 |
| | | | **TECHNICAL FIELDS SEARCHED (Int. Cl. 3)** |
| | | | C 01 D 15/00<br>C 01 F 7/00<br>B 01 J 41/00<br>B 01 J 47/00 |

The present search report has been drawn up for all claims

| Place of search | Date of completion of the search | Examiner |
|---|---|---|
| BERLIN | 02-05-1983 | KESTEN W |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82